# FASCICULE DE BREVET EUROPEEN

(11) **EP 1 262 308 B1**
(45) Date de publication et mention de la délivrance du brevet: **20.06.2007**
(21) Numéro de dépôt: 02291291.9
(22) Date de dépôt: 27.05.2002
(51) Int. Cl.: B29D 11/00, F21V 5/04, F21V 7/00

(54) **Procédé de fabrication d'un composant optique, moule pour la mise en oeuvre de ce procédé et composant optique obtenu par ce procédé**
Verfahren zur Herstellung von einem optischen Gegenstand, Form zur Ausführung dieses Verfahren und ein so hergestellter optischer Gegenstand
Process for making an optical component, mould for this process and optical component obtained by this process

(30) Priorité: 28.05.2001 FR 0107109
(43) Date de publication de la demande: 04.12.2002
(73) Titulaire: VALEO VISION, 93012 Bobigny Cédex (FR)
(72) Inventeur: Gasquet, Jean-Claude, 93012 Bobigny Cedex (FR)

(56) Documents cités:
- EP-A- 0 844 056
- EP-A- 1 055 869
- DE-A- 3 330 320
- US-A- 4 948 537
- PATENT ABSTRACTS OF JAPAN vol. 005, no. 065 (M-066), 30 avril 1981 (1981-04-30) & JP 56 017229 A (DAINIPPON PRINTING CO LTD), 19 février 1981 (1981-02-19)

## Description

La présente invention concerne les composants d'optique en général, et plus particulièrement de tels composants comportant des surfaces discontinues, de manière à former par exemple des lentilles ou des prismes de Fresnel ou à échelons. Elle concerne également un procédé de fabrication de tels composants optiques.

De tels composants optiques sont obtenus de manière générale par moulage d'une matière plastique ou thermoplastique telle que du polyméthylmétacrylate (PMMA) dans un moule. Le moule peut comprendre différentes parties déterminées par la complexité de la forme du composant optique à obtenir.

US-A-4948537, EP-A-844056 et JP-A-56017229 (abrégé) décrivent des procédés, moules et produits selon le préambule des revendications 1, 7, 8.

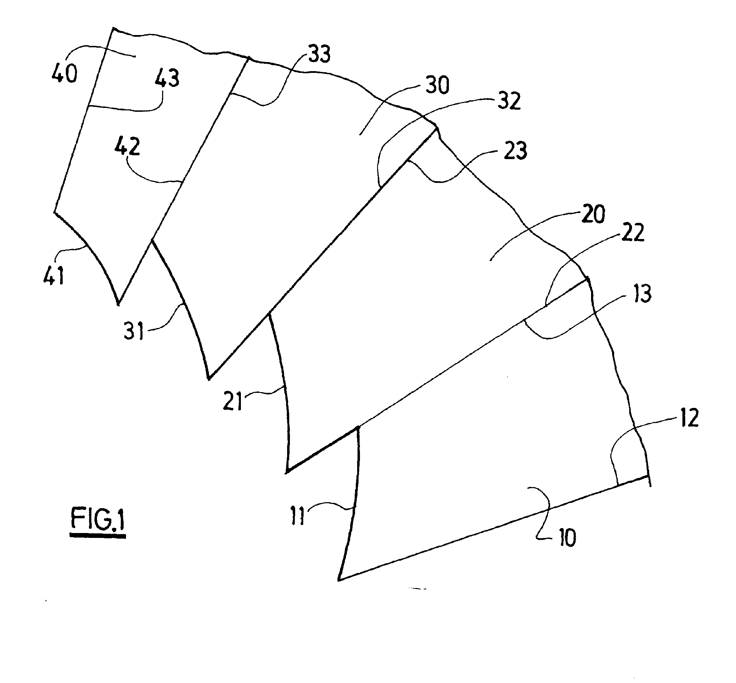

On a représenté sur la Figure 1 une partie d'un moule destiné au moulage de composants à surface discontinue. Un tel moule comporte de manière connue des inserts tels que 10, 20, 30, 40, formés par des lames usinées avec une très grande précision, imposée aussi bien par la forme du composant à mouler, déterminée par leurs surfaces 11, 21, 31 respectivement formant dans la cavité du moule proprement dite les surfaces actives du composant optique, que par leurs faces 12, 13, 22, 23, 32, 33, 42, 43 destinées à venir en contact mutuel et à former des surfaces neutres du composant optique. Chaque lame correspond à une des discontinuités du composant optique à réaliser.

Par convention, dans la présente description, on appelle surface active du composant optique une surface participant à l'élaboration d'un faisceau lumineux, et par laquelle passent des rayons lumineux issus d'une source, et surface neutre du composant optique une surface sans effet sur l'élaboration du faisceau lumineux, et par laquelle ne passe aucun rayon lumineux.

Les lames sont usinées, puis assemblées et maintenues ensemble pour former les parois du moule désiré, complémentaires des surfaces du composant optique à réaliser. Leur assemblage demande également une grande précision si on désire que le composant moulé possède les qualités optiques requises. Il en résulte qu'un tel moule est relativement difficile à obtenir par la précision des lames demandée, par la précision de l'ajustage des lames entre elles et par la maintenance générale du moule.

La présente invention se place dans ce contexte et elle a pour but de proposer un procédé de moulage de composants optiques, selon lequel le moule soit plus facile à obtenir et à maintenir, moins onéreux, les composants optiques ainsi moulés présentant les qualités optiques requises.

La présente invention a donc pour objet un procédé de fabrication d'un composant optique possédant des surfaces actives séparées par des surfaces neutres formant des discontinuités entre les surfaces actives, les surfaces actives et les surfaces neutres faisant entre elles des angles successivement aigus et obtus, le procédé comprenant les étapes consistant à :
- former dans un moule des surfaces complémentaires des surfaces actives et neutres du composant optique ;
- mouler le composant optique sur les surfaces du moule.

Selon la présente invention, l'étape de formation des surfaces du moule complémentaires des surfaces actives et neutres du composant optique est réalisée par découpe continue d'un bloc de matière à l'aide d'un outil de découpe.

Selon d'autres caractéristiques avantageuses et non limitatives de l'invention :
- le procédé comporte en outre l'étape consistant à creuser une dépression dans une première surface du moule complémentaire d'une surface neutre du composant au voisinage d'une deuxième surface du moule complémentaire d'une surface active du composant, les première et deuxième surfaces du moule faisant entre elles un angle obtus.
- la dépression a une profondeur voisine du diamètre de l'outil de découpe.
- la découpe continue est réalisée par électroérosion.
- la découpe continue est réalisée par un rayonnement laser.
- le bloc de matière est un bloc d'acier ou de laiton.

La présente invention a également pour but de proposer un moule pour composant optique possédant des surfaces actives séparées par des surfaces neutres formant des discontinuités entre les surfaces, comportant des surfaces complémentaires des surfaces actives et neutres du composant optique, caractérisé en ce qu'il comporte une dépression dans une première surface du moule complémentaire d'une surface neutre du composant au voisinage d'une deuxième surface du moule complémentaire d'une surface active du composant, les première et deuxième surfaces du moule faisant entre elles un angle obtus.

La présente invention a également pour but de proposer un composant optique possédant des surfaces actives séparées par des surfaces neutres formant des discontinuités entre les surfaces actives, caractérisé en ce que les surfaces neutres comportent un appendice à leur extrémité faisant un angle aigu avec une surface active. De façon avantageuse, le composant optique est réalisé en polyméthylmétacrylate.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 déjà décrite représente un moule pour composants optiques de l'art antérieur ;
- La Figure 2 représente en coupe partielle un composant optique obtenu avec le moule de la Figure 1 ;
- La Figure 3 représente les étapes du procédé de formation des surfaces du moule selon la présente invention, et
- La Figure 4 représente en coupe partielle un composant optique obtenu avec le moule selon la présente invention.

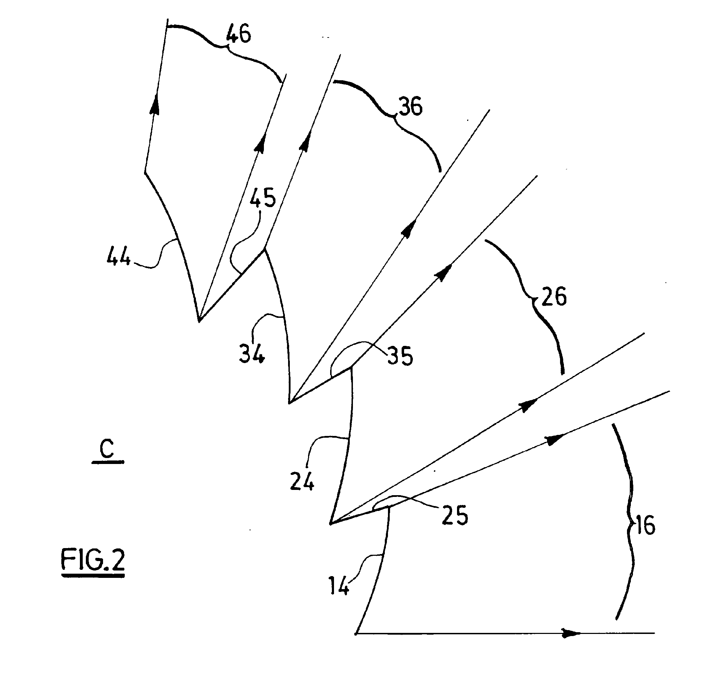

On a représenté sur la Figure 2 le composant optique C obtenu à l'aide du moule de la Figure 1, ainsi que les faisceaux lumineux formés par ce composant. On voit que le composant optique C possède des surfaces actives 14, 24, 34, 44, complémentaires des faces 11, 21, 31, 41 des lames 10, 20, 30, 40 décrites plus haut, et des surfaces neutres 25, 35, 45 formées par les faces 22, 32, 42 des lames 20, 30, 40. Les rayons lumineux issus d'une source (non représentée) traversent les surfaces actives 14, 24, 34, 44 du composant C pour former des faisceaux 16, 26, 36, 46, tandis que les surfaces 25, 35, 45 ne participent pas à l'élaboration de ces faisceaux lumineux. Les surfaces actives 14, 24, 34, 44 sont séparées par les surfaces neutres 25, 35, 45 formant des discontinuités entre les surfaces actives.

On comprend donc qu'il n'est pas nécessaire de mouler avec une grande précision ces surfaces neutres 25, 35, 45, puisqu'elles sont sans incidence sur les performances optiques du composant final.

Conformément à la présente invention, il est prévu d'utiliser les surfaces du moule complémentaires des surfaces neutres 25, 35, 45 pour faciliter l'usinage des surfaces complémentaires des surfaces actives 14, 24, 34, 44.

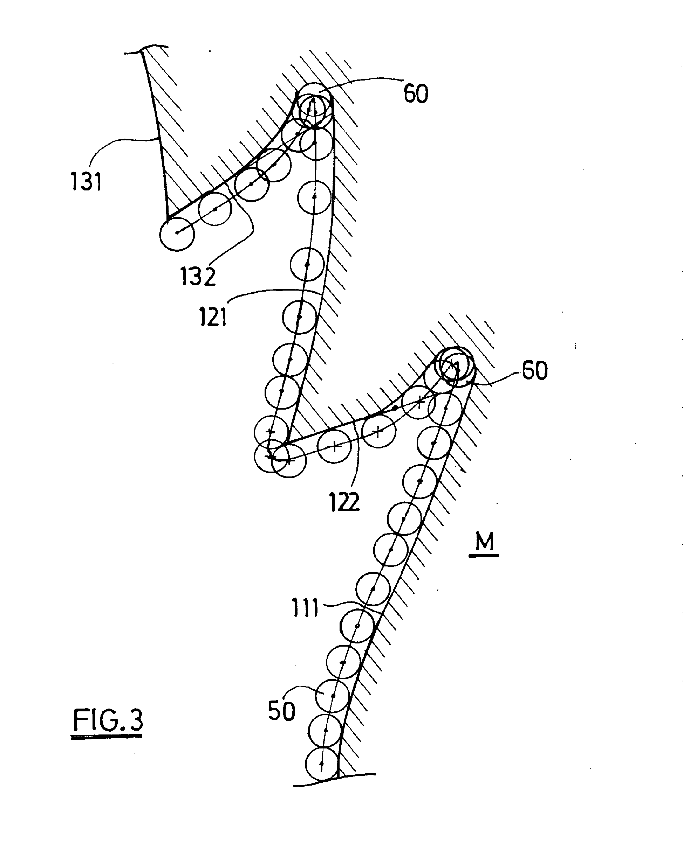

On a représenté sur la Figure 3 le procédé de formation des surfaces du moule. On voit sur cette Figure une partie d'un bloc de matière, par exemple de l'acier ou du laiton, et un outil de découpe 50 délimitant le contour de ce bloc de matière, représenté en plusieurs positions successives par sa section sur la Figure 3. On n'a représenté sur la Figure 3 que la partie M du bloc de matière destinée à former le moule final, l'autre partie ayant été omise pour plus de clarté.

L'outil de découpe 50 peut être constitué d'un fil 50, par exemple un fil de tungstène tendu entre deux supports de manière à rester rectiligne. Le fil 50 est guidé dans le bloc d'acier ou de laiton selon une trajectoire curviligne perpendiculaire à l'axe du fil tout en étant parcouru par un courant électrique.

Le long de cette trajectoire, le fil 50 est guidé avec précision de manière à former par électroérosion les surfaces 111, 121, 131 du moule complémentaires des surfaces actives du composant optique à réaliser, ainsi que les surfaces 122, 132 du moule complémentaires des surfaces neutres du composant optique. Selon ce procédé, il est aisé de réaliser dans le moule des angles aigus, par exemple entre les surfaces 122 et 121, ou entre les surfaces 132 et 131.

Par contre, la réalisation dans le moule d'angles obtus est limitée par le diamètre du fil 50. On peut ainsi réaliser dans le moule des angles obtus ayant un sommet arrondi, dont le rayon de courbure est fonction du diamètre du fil de découpe. Par exemple, avec un fil de 0,1 mm de diamètre, il sera possible d'obtenir un rayon de 0,06 mm.

On peut cependant remarquer sur la Figure 2 que les angles obtus du moule sont complémentaires d'angles aigus du composant optique à réaliser, par exemple entre les surfaces 14 et 25, 24 et 35, 34 et 45. S'il est important de réaliser avec précision les surfaces actives 14, 24, 34 sur toute leur longueur, puisqu'elles participent à l'élaboration des faisceaux 16, 26, 36, 46, la précision de réalisation des surfaces neutres 25, 35, 45 n'a aucun effet sur le comportement optique du composant finalement obtenu puisqu'elles sont situées dans des zones d'ombre entre deux faisceaux.

Cette propriété est mise à profit selon la présente invention pour réaliser les angles obtus du moule. Ainsi, après que le fil 50 ait formé par exemple la surface 111 complémentaire d'une surface active du composant optique, le fil 50 creuse une dépression 60 dans la surface adjacente 122, au voisinage de la jonction entre ces deux surfaces du moule M. De préférence, cette dépression 60 sera peu profonde, et correspondra à un aller-retour de l'outil de découpe, en l'occurrence du fil 50. Elle aura ainsi une profondeur voisine du diamètre du fil 50. Il est alors possible d'utiliser, pour découper la surface du moule par électroérosion, des fils de tungstène de diamètre plus important, et donc des fils plus résistants et moins onéreux. On pourra par exemple utiliser des fils de 0,25 mm de diamètre.

Après cette étape de découpe de la surface du moule, on pourra alors procéder au moulage, par exemple par injection, du composant optique.

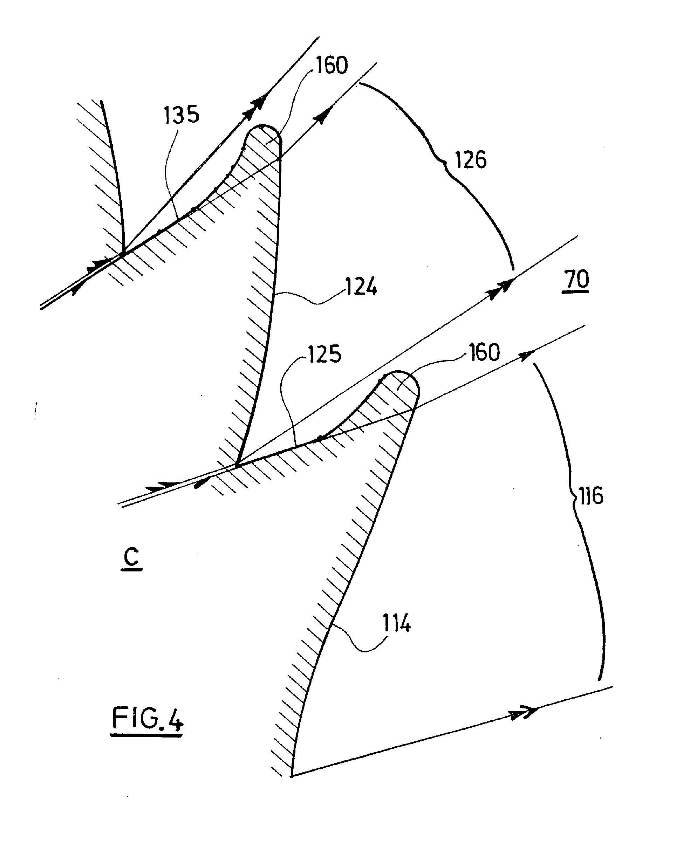

On a représenté sur la Figure 4 le composant optique C obtenu par moulage dans le moule réalisé selon la Figure 3. On voit sur cette Figure que les surfaces actives du composant 111 et 121 sont séparées par une surface neutre 122, cette dernière comportant un appendice 160 complémentaire de la dépression 60, l'appendice 160 étant situé à l'extrémité de la surface neutre faisant un angle aigu avec la surface active adjacente 114.

La surface active 114 transmet le faisceau lumineux 116, et la surface active 124 transmet le faisceau lumineux 126, les deux faisceaux lumineux 124 et 126 étant séparés par une zone d'ombre 70. On voit que l'appendice 160 s'étend dans la zone d'ombre 70, et ne constitue pas une gêne pour les faisceaux 116 ou 126.

On a donc bien réalisé un procédé de moulage de composants optiques, selon lequel le moule est plus facile à obtenir et à maintenir, et moins onéreux que les moules de l'art antérieur. En effet, le moule est constitué d'un seul bloc, et ne nécessite pas d'ajustage précis de pièces rapportées. L'opération de découpe du moule est effectuée en un seul passage, quel que soit le nombre de dents ou de surfaces actives du composant optique final. Des fils de découpe de diamètre 0,25 mm peuvent être couramment utilisés. Les composants optiques moulés selon ce procédé présentant les qualités optiques requises.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que l'on pourra utiliser d'autres outils de découpe qu'un fil d'électroérosion, comme par exemple un faisceau de rayonnement laser.

## Revendications

1. Procédé de fabrication d'un composant optique (C) possédant des surfaces actives (114, 124) séparées par des surfaces neutres (125, 135) formant des discontinuités entre les surfaces actives (114, 124), les surfaces actives (114, 124) et les surfaces neutres (125, 135) faisant entre elles des angles successivement aigus et obtus, le procédé comprenant les étapes consistant à :
- former dans un moule (M) des surfaces complémentaires (111, 121 ; 122, 132) des surfaces actives et neutres (114, 124 ; 125, 135) du composant optique (C) ;
- mouler le composant optique (C) sur les surfaces du moule (M),
**caractérisé en ce que** l'étape de formation des surfaces (111, 121 ; 122, 132) du moule complémentaires des surfaces actives et neutres (114, 124 ; 125, 135) du composant optique (C) est réalisée par découpe continue d'un bloc de matière à l'aide d'un outil de découpe (50).

2. Procédé selon la revendication 1, **caractérisé en ce qu**'il comporte en outre l'étape consistant à creuser une dépression (60) dans une première surface (122, 132) du moule complémentaire d'une surface neutre (125, 135) du composant (C) au voisinage d'une deuxième surface (111, 121) du moule complémentaire d'une surface active (114, 124) du composant (C), les première et deuxième surfaces du moule faisant entre elles un angle obtus.

3. Procédé selon la revendication 2, **caractérisé en ce que** la dépression (60) a une profondeur voisine du diamètre de l'outil de découpe (50)

4. Procédé selon la revendication 1, **caractérisé en ce que** la découpe continue est réalisée par électroérosion.

5. Procédé selon la revendication 1, **caractérisé en ce que** la découpe continue est réalisée par un rayonnement laser.

6. Procédé selon la revendication 1, **caractérisé en ce que en ce que** le bloc de matière est un bloc d'acier ou de laiton.

7. Moule pour composant optique (C) possédant des surfaces actives (114, 124) séparées par des surfaces neutres (125, 135) formant des discontinuités entre les surfaces actives (114, 124), les surfaces actives (114, 124) et les surfaces neutres (125, 135) du composant optique (C) faisant entre elles des angles successivement aigus et obtus, le moule (M) comportant des surfaces complémentaires (111, 121 ; 122, 132) des surfaces actives et neutres (114, 124 ; 125, 135) du composant optique (C), **caractérisé en ce qu**'il comporte une dépression (60) dans une première surface (122, 132) du moule complémentaire d'une surface neutre (125, 135) du composant (C) au voisinage d'une deuxième surface (111, 121) du moule complémentaire d'une surface active (114, 124) du composant (C), les première et deuxième surfaces du moule faisant entre elles un angle obtus.

8. Composant optique (C) possédant des surfaces actives (114, 124) séparées par des surfaces neutres (125, 135) formant des discontinuités entre les surfaces actives (114, 124), les surfaces actives (114, 124) et les surfaces neutres (125, 135) faisant entre elles des angles successivement aigus et obtus, **caractérisé en ce que** les surfaces neutres (125, 135) comportent un appendice (160) à leur extrémité faisant un angle aigu avec une surface active (114, 124).

9. Composant optique (C) selon la revendication 8, **caractérisé en ce qu**'il est réalisé en polyméthylmatacrylate.

## Claims

1. Method for production of an optical component (C) which has active surfaces (114, 124) separated by neutral surfaces (125, 135) which form discontinuities between the active surfaces (114, 124), the active surfaces (114, 124) and the neutral surfaces (125, 135) forming between one another angles which are successively acute and obtuse, the method comprising the steps consisting of:
- forming in a mould (M) surfaces (111, 121; 122, 132) which are complementary to the active and neutral surfaces (114, 124; 125, 135) of the optical component (C); and
- moulding the optical component (C) on the surfaces of the mould (M), **characterised in that that** step of formation of the mould surfaces (111, 121; 122, 132) which are complementary to the active and neutral surfaces (114, 124; 125, 135) of the optical component (C) is carried out by continuous cutting of a block of material by means of a cutting tool (50).

2. Method according to claim 1, **characterised in that** it additionally comprises the step consisting of hollowing out a depression (60) in a first surface (122, 132) of the complementary mould, of a neutral surface (125, 135) of the component (C), in the vicinity of a second surface (111, 121) of the complementary mould, of an active surface (114, 124) of the component (C), the first and second surfaces of the mould forming an obtuse angle between one another.

3. Method according to claim 2, **characterised in that** the depression (60) has a depth which is close to the diameter of the cutting tool (50).

4. Method according to claim 1, **characterised in that** the continuous cutting is carried out by means of electro-erosion.

5. Method according to claim 1, **characterised in that** the continuous cutting is carried out by laser radiation.

6. Method according to claim 1, **characterised in that** the block of material is a block of steel or brass.

7. Mould for an optical component (C) which has active surfaces (114, 124) separated by neutral surfaces (125, 135) which form discontinuities between the active surfaces (114, 124), the active surfaces (114, 124) and the neutral surfaces (125, 135) of the optical component (C) forming between one another angles which are successively acute and obtuse, the mould (M) comprising surfaces (111, 121; 122, 132) which are complementary to the active and neutral surfaces (114, 124; 125, 135) of the optical component (C), **characterised in that** it comprises a depression (60) in a first surface (122, 132) of the mould which is complementary to a neutral surface (125, 135) of the component (C) in the vicinity of a second surface (111, 121) of the mould which is complementary to an active surface (114, 124) of the component (C), the first and second surfaces of the mould forming an obtuse angle between one another.

8. Optical component (C) which has active surfaces (114, 124) separated by neutral surfaces (125, 135) which form discontinuities between the active surfaces (114, 124), the active surfaces (114,124) and the neutral surfaces (125, 135) forming between one another angles which are successively acute and obtuse, **characterised in that** the neutral surfaces (125, 135) comprise an appendage (160) at their end which forms an acute angle with an active surface (114,124).

9. Optical component (C) according to claim 8, **characterised in that** it is made of polymethylmatacrylate.

## Patentansprüche

1. Verfahren zum Herstellen eines optischen Teils (C), das aktive Oberflächen (114, 124) aufweist, die durch neutrale Oberflächen (125, 135) voneinander getrennt sind, welche zwischen den aktiven Oberflächen (114, 124) Diskontinuitäten bilden, wobei die aktiven Oberflächen (114, 124) und die neutralen Oberflächen (125, 135) zwischen sich aufeinanderfolgend spitze und stumpfe Winkel bilden, wobei das Verfahren die folgenden Schritte umfasst:
- Ausbilden von Oberflächen (111, 121; 122, 132) in einem Formwerkzeug (M), die zu den aktiven und neutralen Oberflächen (114, 124; 125, 135) des optischen Teils (C) komplementär sind;
- Formen des optischen Teils (C) auf den Oberflächen des Formwerkzeugs (M),
**dadurch gekennzeichnet, dass** die Ausbildung der zu den aktiven und neutralen Oberflächen (114, 124; 125, 135) des optischen Teils (C) komplementären Oberflächen (111,121; 122, 132) des Formwerkzeugs durch kontinuierliches Schneiden eines Werkstoffblocks mit Hilfe eines Schneidwerkzeugs (50) erfolgt.

2. Verfahren nach Anspruch 1,
**dadurch gekennzeichnet, dass** es zudem den Schritt umfasst, der darin besteht, in einer ersten, zu einer neutralen Oberfläche (125, 135) des Teils (C) komplementären Oberfläche (122, 132) des Formwerkzeugs eine Vertiefung (60) in der Nähe einer zweiten, zu einer aktiven Oberfläche (114, 124) des Teils (C) komplementären Oberfläche (111, 121) des Formwerkzeugs auszubilden, wobei die erste und die zweite Oberfläche des Formwerkzeugs zwischen sich einen stumpfen Winkel bilden.

3. Verfahren nach Anspruch 2,
**dadurch gekennzeichnet, dass** die Vertiefung (60) eine Tiefe hat, die in etwa dem Durchmesser des Schneidwerkzeugs (50) entspricht.

4. Verfahren nach Anspruch 1,
**dadurch gekennzeichnet, dass** das kontinuierliche Schneiden durch Elektroerosion erfolgt.

5. Verfahren nach Anspruch 1,
**dadurch gekennzeichnet, dass** das kontinuierliche Schneiden durch einen Laserstrahl erfolgt.

6. Verfahren nach Anspruch 1,
**dadurch gekennzeichnet, dass** der Werkstoffblock ein Stahl- oder Messingblock ist.

7. Formwerkzeug für ein optisches Teil (C), das aktive Oberflächen (114, 124) aufweist, die durch neutrale Oberflächen (125, 135) voneinander getrennt sind, welche zwischen den aktiven Oberflächen (114, 124) Diskontinuitäten bilden, wobei die aktiven Oberflächen (114, 124) und die neutralen Oberflächen (125, 135) zwischen sich aufeinanderfolgend spitze und stumpfe Winkel bilden, wobei das Formwerkzeug (M) Oberflächen (111, 121; 122, 132) aufweist, die zu den aktiven und neutralen Oberflächen (114, 124; 125, 135) des optischen Teils (C) komplementär sind,
**dadurch gekennzeichnet, dass** es in einer ersten, zu einer neutralen Oberfläche (125, 135) des Teils (C) komplementären Oberfläche (122, 132) des Formwerkzeugs eine Vertiefung (60) in der Nähe einer zweiten, zu einer aktiven Oberfläche (114, 124) des Teils (C) komplementären Oberfläche (111, 121) des Formwerkzeugs aufweist, wobei die erste und die zweite Oberfläche des Formwerkzeugs zwischen sich einen stumpfen Winkel bilden.

8. Optisches Teil (C) mit aktiven Oberflächen (114, 124), die durch neutrale Oberflächen (125, 135) voneinander getrennt sind, welche zwischen den aktiven Oberflächen (114, 124) Diskontinuitäten bilden, wobei die aktiven Oberflächen (114, 124) und die neutralen Oberflächen (125, 135) zwischen sich aufeinanderfolgend spitze und stumpfe Winkel bilden,
**dadurch gekennzeichnet, dass** die neutralen Oberflächen (125, 135) an ihrem Ende einen Fortsatz (160) aufweisen, der mit einer aktiven Oberfläche (114, 124) einen spitzen Winkel bildet.

9. Optisches Teil (C) nach Anspruch 8,
**dadurch gekennzeichnet, dass** es aus Polymethylmethacrylat hergestellt ist.
